# EUROPEAN PATENT SPECIFICATION

(11) **EP 2 903 296 B1**
(45) Date of publication and mention of the grant of the patent: **17.07.2019**
(21) Application number: 13841321.6
(22) Date of filing: 20.09.2013
(51) Int. Cl.: H04Q 9/00, G08C 15/00, G01D 4/00

(54) **DATA ACQUISITION DEVICE, DATA ACQUISITION SYSTEM, AND PROGRAM**
DATENERFASSUNGSVORRICHTUNG, DATENERFASSUNGSSYSTEM UND PROGRAMM
DISPOSITIF, SYSTÈME ET PROGRAMME D'ACQUISITION DE DONNÉES

(30) Priority: 28.09.2012 JP 2012217610
(43) Date of publication of application: 05.08.2015
(73) Proprietor: Panasonic Intellectual Property Management Co., Ltd., Osaka-shi, Osaka 540-6207 (JP)
(72) Inventor: KOYAMA, Masaki, Osaka-shi Osaka 540-6207 (JP)
(74) Representative: Appelt, Christian W.
(86) International application number: PCT/JP2013/005548
(87) International publication number: WO 2014/050040

(56) References cited:
- WO-A1-2012/101779
- JP-A- H0 435 249
- JP-A- H0 435 249
- JP-A- 2010 004 264
- JP-A- 2012 175 688
- JP-A- 2012 175 688
- US-A1- 2012 026 005

## Description

### TECHNICAL FIELD

The present invention relates to a data acquisition device, a data acquisition system, and a program for acquiring data from a plurality of terminal devices.

### BACKGROUND ART

Many systems have been implemented in the prior art to acquire data using communications. Systems of this kind are constituted by a plurality of slave stations on a side providing data, and a master station on a side acquiring data. If the communications used in a system of this kind are wireless communications or power line communications (PLC), data is acquired in a state of poor communications reliability, depending on the effects of ambient noise, and the like. In such cases, data acquisition by a polling method is employed as a data acquisition method which is easily controllable and is highly reliable.

Among systems of this kind which include a master station and a plurality of slave stations, a system is known in which a master station acquires data from a plurality of slave stations at a fixed time cycle (data acquisition time cycle) (see, for example, JP 2012-175688 A (hereinafter, "Document 1")). In a system of this kind, after the master station has performed a series of data acquisition from all of the slave stations, or after a series of retries in the slave stations has been carried out several times in respect of omitted data, there is a vacant time until the next data acquisition. During this vacant time, an upper-level device which is located to the upper-level side of the master station acquires omitted portions of past data acquisition (back-up acquisition), delivers firmware to the slave stations, and so on. In other words, in the data acquisition time cycle, there is a data acquisition required time period for the master station to acquire data from the slave stations, and a vacant time other than the data acquisition required time period. The upper-level device carries out maintenance communications during the vacant time, rather than the data acquisition required time period.

In a conventional system which acquires data cyclically in this way, back-up acquisition, firmware delivery, and the like, are carried out during the vacant time after preferentially carrying out data acquisition within the data acquisition time cycle, as described above. Consequently, when the vacant time within the data acquisition time cycle is short, it has been necessary to change the length of the data acquisition time cycle on the basis of a decision made by a human, which involves, for instance, operating a setting device for setting the data acquisition time cycle or issuing an instruction remotely from an upper-level system.

JP 2012 175688 A describes A slave station attached to a power meter which acquires meter-reading information from the power meter. A master station acquires the meter-reading information from the slave station through a first communication network, and collects the meter-reading information. The master station provides a monitoring controller with the collected meter-reading information through a second communication network.

JP H04 35249 A describes a slave station which is polled based on polling information sent from a master station and a data storage means stores the data of the slave station collected by polling. Then notice processing means uses a notice message from the slave station to revise the data stored in the data storage means and the data stored in the data storage means is sent based on the data transmission request from the master station 1.

EP 2 227 065 A1 describes a wireless sensor network of devices including a sensor and a coordinator: the sensor comprising sensing means operable to detect values of a parameter; transmission and reception means for wireless communication with other devices in the network; and sensor control means operable to control a sleep pattern of the sensor; and the coordinator comprising transmission and reception means for wireless communication with other devices in the network; wherein the sensor transmission means is operable to transmit value information as to the parameter values and the coordinator transmission means is operable to transmit an indication of a suitable sensor sleep pattern taking into account the value information.

US 2012/026005 A1 describes an automatic meter reading system for an underground distribution line using wired/wireless communication. The system includes at least one Data Concentration Unit (DCU), at least one Wireless Gathering Unit (WGU), and at least one wireless communication modem. The DCU is installed in a ground transformer, and sends meter reading data to an underground high-voltage distribution line (DL) using a Frequency Division Duplex (FDD) power line communication repeating method. The WGU is installed on a ground rising pipe or at a multi-consumer lead-in wire, and sets up a higher wireless mesh network and a lower wireless mesh network. The wireless communication modem sets up the lower wireless mesh network along with the WGU and the wireless communication modems, gathers the meter reading data, stores the gathered meter reading data, and transfers the stored meter reading data to the DCU through the WGU.

WO 2012/101779 A1 describes a network management system for supporting a simultaneous distribution that is a request from an automatic meter reading system and that is from a gateway to a terminal; a network management server; a network terminal; and a network management method.

### SUMMARY OF INVENTION

The present invention is devised in view of the abovementioned circumstances, an object thereof being to provide a data acquisition device, a data acquisition system, and a program whereby a data acquisition time cycle can be set automatically, without requiring a human decision, and overall operation of the system for acquiring data can be performed efficiently.

A data acquisition device according to the present invention is a data acquisition device configured to acquires data from a plurality of terminal devices holding the data and provide the data to an upper-level device, the data acquisition device including: a data acquisition unit configured to acquire the data from the plurality of terminal devices; and a time cycle setting unit configured to set a data acquisition time cycle for the data acquisition unit to periodically acquire the data from the plurality of terminal devices, wherein the data acquisition time cycle includes a data acquisition required time period for acquiring the data from the plurality of terminal devices, and a time period during which the upper-level device can perform communications, and the time cycle setting unit configured to set the data acquisition time cycle on the basis of information stored in the data acquisition device and relating to at least one of communications between the data acquisition device and the plurality of terminal devices, and communications by the upper-level device.

Desirably, this data acquisition device further includes a storage unit configured to store a data acquisition required time period needed for past data acquisition, and the data acquisition time cycle set in that case; the information relating to communications between the data acquisition device and the plurality of terminal devices is the data acquisition required time period which is stored in the storage unit; and when a sum value obtained by adding, to the data acquisition required time period stored in the storage unit, a prescribed proportion of the data acquisition required time period or a prescribed value is longer than the current data acquisition time cycle, the time cycle setting unit is configured to set the data acquisition time cycle to the sum value.

Desirably, this data acquisition device further includes a storage unit configured to store a plurality of data acquisition required time periods needed for past data acquisition; the information relating to communications between the data acquisition device and the plurality of terminal devices is the plurality of data acquisition required time periods which are stored in the storage unit; and the time cycle setting unit is configured to statistically process an average value and variation of the plurality of data acquisition required time periods stored in the storage unit, and set the data acquisition time cycle in such a manner that the current data acquisition time cycle exceeds an upper limit value of a specified range of variation from the average value.

Desirably, this data acquisition device further includes a storage unit configured to store a data acquisition required time period needed for past data acquisition and a type of communications by the upper-level device performed during a vacant time other than the data acquisition required time period; the information relating to the communications by the upper-level device is the type of communications by the upper-level device; and when the type of communications by the upper-level device is back-up acquisition, the time cycle setting unit is configured to set the data acquisition time cycle to a sum value obtained by adding, to the data acquisition required time period stored in the storage unit, a prescribed proportion of the data acquisition required time period, and a proportion, determined for use for back-up acquisition, of the data acquisition required time period or a prescribed amount determined for use for back-up acquisition.

Desirably, in this data acquisition device, the information relating to the communications by the upper-level device is the type of communication from the upper-level device; and when the type of communication from the upper-level device is firmware delivery, the time cycle setting unit is configured to set the data acquisition time cycle to a sum value obtained by adding, to the data acquisition required time period, a prescribed proportion of the data acquisition required time period, and a proportion, determined for use for firmware delivery, of the data acquisition required time period or a prescribed amount determined for use for firmware delivery.

Desirably, this data acquisition device further includes a storage unit configured to store time cycle modification information indicating a time cycle instructed by the upper-level device; the information relating to communications between the data acquisition device and the plurality of terminal devices is the time cycle modification information which is stored in the storage unit; and when extending the data acquisition time cycle, the time cycle setting unit is configured to set the data acquisition time cycle by using the time cycle modification information stored in the storage unit.

Desirably, this data acquisition device further includes a storage unit configured to store a history of the data acquisition required time period needed for past data acquisition, and the number of omitted data elements that could not be acquired in the data acquisition required time period; the information relating to communications between the data acquisition device and the plurality of terminal devices is the history of the data acquisition required time period and the number of omitted data elements, which is stored in the storage unit; and the time cycle setting unit is configured to set the data acquisition time cycle in such a manner that the omitted data elements are acquired by back-up acquisition by the upper-level device in a prescribed time period which is longer than the data acquisition time cycle.

Desirably, this data acquisition device further includes: a storage unit configured to store a communication route and a communication quality for each of the plurality of terminal devices; and a calculation unit configured to calculate a turn-around time by using the communication route and the communication quality, for each of the plurality of terminal devices, and calculates a completion time during which the acquisition of data from the plurality of terminal devices is completed, by using the turn-around times; the information relating to communications between the data acquisition device and the plurality of terminal devices is the communication route and the communication quality which are stored in the storage unit; and the time cycle setting unit is configured to set the data acquisition time cycle in accordance with the completion time calculated by the calculation unit.

In this data acquisition device, desirably, the time cycle setting unit is configured to set a sum value obtained by adding, to the completion time, a prescribed proportion of the completion time, as the data acquisition time cycle.

Desirably, this data acquisition device further includes a storage unit configured to store a history of past change in the data acquisition time cycle; the information relating to communications between the data acquisition device and the plurality of terminal devices is the history of past change in the data acquisition time cycle, which is stored in the storage unit; and the time cycle setting unit is configured to set a new data acquisition time cycle in accordance with a tendency of past change in the data acquisition time cycle, which is stored in the storage unit.

Desirably, in this data acquisition device, when the tendency of past change in the data acquisition time cycle is in a direction of decrease, the time cycle setting unit causes the data acquisition time cycle to follow this change only when a prediction value which is predicted on the basis of the tendency of change in the data acquisition time cycle is lower than a specified determination reference.

Desirably, in this data acquisition device, the time cycle setting unit does not have the determination reference, when the tendency of the past change in the data acquisition time cycle is in a direction of increase.

The data acquisition system according to the present invention includes: the data acquisition device; and a plurality of terminal devices each having a function for holding data and a function for communicating with the data acquisition device.

A program according to the present invention is a program for causing a computer, which is used in a data acquisition device configured to acquire data from a plurality of terminal devices holding the data and provide the data to an upper-level device, to function as: a data acquisition unit configured to acquire the data from the plurality of terminal devices, and a time cycle setting unit configured to set a data acquisition time cycle for the data acquisition unit to periodically acquire the data from the plurality of terminal devices, wherein the data acquisition time cycle includes a data acquisition required time period for acquiring the data from the plurality of terminal devices, and a time period during which the upper-level device can perform communications; and the time cycle setting unit configured to set the data acquisition time cycle on the basis of information stored in the data acquisition device and relating to at least one of communications between the data acquisition device and the plurality of terminal devices, and communications by the upper-level device. The present invention is not limited to being a program and may also be a computer-readable recording medium on which the program is recorded.

In the present invention, a data acquisition time cycle for the data acquisition device to acquire data periodically from the terminal devices is set automatically on the basis of at least one of information held in the data acquisition device and relating to communications between the data acquisition device and the plurality of terminal devices, and information relating to communications by the upper-level device. Therefore, the overall operation of the system for acquiring data can be carried out efficiently.

### BRIEF DESCRIPTION OF DRAWINGS

Preferred embodiments of the present invention are described in detail below. Other characteristic features and advantages of the present invention will become more apparent from the following detailed description and the accompanying drawings.
Fig. 1 is a block diagram showing an overall configuration of a data acquisition system;
Fig. 2 is a block diagram showing a configuration of a master station;
Fig. 3 is a block diagram showing a configuration of a slave station;
Fig. 4 is an illustrative diagram of a data acquisition operation of a master station;
"A" and "B" of Fig. 5 are illustrative diagrams of a data acquisition time cycle setting operation in a master station relating to a first embodiment;
"A" and "B" of Fig. 6 are illustrative diagrams of a data acquisition time cycle setting operation in a master station relating to a modification of the first embodiment;
"A" and "B" of Fig. 7 are illustrative diagrams of a data acquisition time cycle setting operation in a master station relating to a second embodiment; and
"A" and "B" of Fig. 8 are illustrative diagrams of a data acquisition time cycle setting operation in a master station relating to a fourth embodiment.

### DESCRIPTION OF EMBODIMENTS

The master stations (data acquisition devices) according to embodiments 1 to 6 described below set a data acquisition time cycle on the basis of at least one of information held in the master station and relating to communications between the master station and a plurality of slave stations (terminal devices), and information relating to communications of an upper-level server (upper-level device). This data acquisition time cycle is the time cycle at which the master station acquires data periodically from the plurality of slave stations. The master stations according to the respective embodiments can carry out operation of the data acquisition system, efficiently, without requiring a human decision, by automatically adjusting the data acquisition time cycle to an optimal time cycle.

The first to sixth embodiments are described in sequence below.

### (First embodiment)

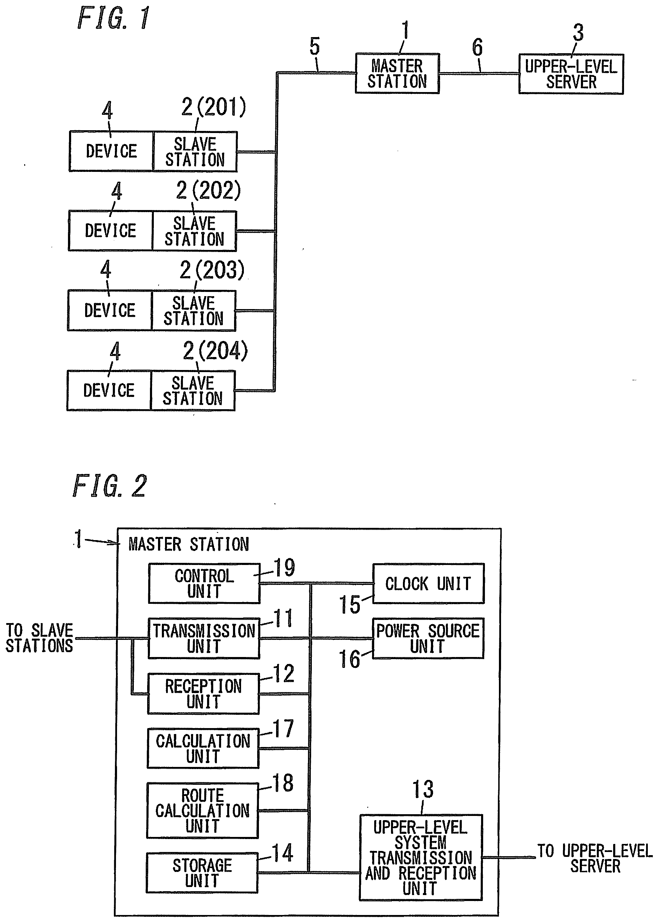

As shown in Fig. 1, the data acquisition system according to the first embodiment is provided with a master station (data acquisition device) 1, a plurality of (in the illustrated example, four) slave stations (terminal devices) 2(201), 2(202), 2(203), 2(204), and an upper-level server (upper-level device) 3. A device 4, such as a power meter, is connected to each of the slave stations 2. The slave stations 2 hold data that has been acquired from the connected device 4. The master station 1 gathers the data held by the respective slave stations 2. The upper-level server 3 gathers data acquired by the master station 1.

In a data acquisition system of this kind, the concept of a data acquisition time cycle is used when the master station 1 gathers the data of the slave stations 2. The master station 1 carries out an operation for gathering data from all of the slave stations 2(201), 2(202), 2(203), 2(204), at each data acquisition time cycle. In other words, the data acquisition time cycle is a time cycle for acquiring data from the plurality of slave stations 2(201), 2(202), 2(203), 2(204) which are under the control of the master station 1. This data acquisition time cycle is set to an initial value of 30 minutes, for example.

Radio waves or power lines, or the like, are used as a transmission path 5 between the master station 1 and the plurality of slave stations 2. When the transmission path 5 is a power line, then the master station 1 and the plurality of slave stations 2 perform power line communication (PLC). On the other hand, when the transmission path 5 is radio waves, then the master station 1 and the plurality of slave stations 2 perform wireless communication.

Furthermore, if there is a slave station 2 which cannot communicate directly with the master station 1, among the plurality of slave stations 2, then the master station 1 can gather data from the slave station 2 with which direct communication is not possible, by using multi-hop communication via another slave station 2 which is different from the slave station 2 in question.

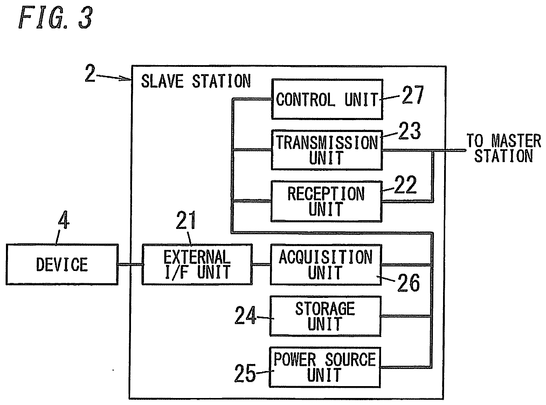

The main constituent part of each slave station 2 is, for example, a computer (including a microcomputer) in which a central processing unit (CPU) and a memory are installed. As shown in Fig. 3, this slave station 2 is provided with an external interface unit (called "external I/F unit" below) 21, a reception unit 22, a transmission unit 23, a storage unit 24, a power source unit 25, an acquisition unit 26, and a control unit 27. The external I/F unit 21 is provided in order to connect with the device 4. The reception unit 22 has a function for receiving communication packets from the master station 1 (see Fig. 1) via the transmission path 5. The transmission unit 23 has a function for transmitting communication packets to the master station 1 (see Fig. 1) via the transmission path 5. The storage unit 24 stores information of various kinds. The power source unit 25 supplies drive power to the respective units of the slave station 2. The control unit 27 controls the respective units of the slave station 2.

The main constituent part of the master station 1 is, for example, a computer (including a microcomputer) in which a CPU and a memory are installed. As shown in Fig. 2, this master station 1 is provided with: a transmission unit 11, a reception unit 12, an upper-level system transmission and reception unit (communication unit) 13, a storage unit 14, a clock unit 15, a power source unit 16, a calculation unit 17, a route calculation unit 18, and a control unit (data acquisition unit, time cycle setting unit) 19. The transmission unit 11 has a function for transmitting communication packets to the slave stations 2 (see Fig. 1) via the transmission path 5. The reception unit 12 has a function for receiving communication packets from the slave stations 2 via the transmission path 5. The upper-level system transmission and reception unit 13 has a function for communicating with the upper-level server 3 (see Fig. 1). The storage unit 14 stores information of various kinds. The clock unit 15 indicates the current time. The power source unit 16 supplies power for driving the master station 1, to the respective units thereof. The control unit 19 controls the respective units of the master station 1.

In a data acquisition system having a configuration of this kind, the storage unit 14 of the master station 1 stores a slave station list indicating a list of the plurality of slave stations 2 which are under the control of the master station 1, and a data acquisition time cycle indicating the time cycle for the master station 1 to acquire data from the slave stations 2.

The control unit 19 of the master station 1 functions as a data acquisition unit which periodically acquires data from the plurality of slave stations 2. The control unit 19 checks the data acquisition time cycle stored in the storage unit 14 and the time indicated by the clock unit 15, and starts the acquisition of data from the slave stations 2 when it is determined that a time for starting data acquisition has been reached. Firstly, the control unit 19 selects an initial slave station 201 on the basis of the slave station list which is stored in the storage unit 14. The control unit 19 controls the transmission unit 11 so as to transmit a data acquisition request packet to the slave station 201. The data acquisition request packet reaches the reception unit 22 of the slave station 201 via the transmission path 5 (see Fig. 3).

The acquisition unit 26 of the slave station 201 (see Fig. 3) acquires data from the device 4 via the external I/F unit 21. This data is the count value of the device 4, for example. The storage unit 24 stores data that has been acquired by the acquisition unit 26.

Thereupon, when the reception unit 22 receives a data acquisition request packet from the master station 1 (see Fig. 1), the control unit 27 generates a data acquisition response packet in order to provide a data acquisition response. The data acquisition response packet includes data that is stored in the storage unit 24, in other words, data from the device 4. The control unit 27 controls the transmission unit 23 so as to transmit the data acquisition response packet to the master station 1 via the transmission path 5.

In the master station 1 shown in Fig. 2, when the reception unit 12 receives a data acquisition response packet from the slave station 201, the storage unit 14 stores the data included in the data acquisition response packet.

Thereupon, the master station 1 successively carries out similar operations to the case of the slave station 201, in respect of the remaining slave stations 202, 203, 204 included in the slave station list (see fig. 1), and thereby acquires data from the remaining slave stations 202, 203, 204.

When the master station 1 has acquired data from all of the slave stations 201, 202, 203, 204, the control unit 19 of the master station 1 controls the upper-level system transmission and reception unit 13 so as to transmit the data accumulated in the storage unit 14 to the upper-level server 3 (see Fig. 1). The data is transmitted from the master station 1 to the upper-level server 3 via a transmission path 6 such as an Ethernet (registered trademark).

Depending on the state of the transmission path 5, the master station 1 may not necessarily be able to gather all of the data of the plurality of slave stations 2. Therefore, the upper-level server 3 recognizes the data that is lacking, and can carry out back-up acquisition of data from the slave station 2 having the data that could not be gathered by the master station 1, via the master station 1.

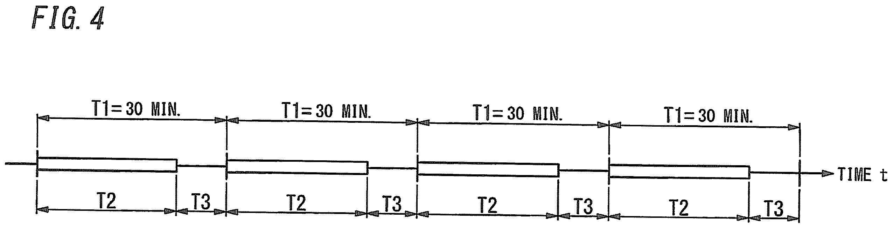

As shown in Fig. 4, normally, the master station 1 completes a series of data acquisition from the plurality of slave stations 2, within the data acquisition time cycle T1, and if there is a slave station 2 from which data has not been acquired, carries out a series of retries, several times, and then issues a notification to the upper-level server 3. Here, the time period required to acquire data by the master station 1 is called the data acquisition required time period T2. The upper-level server 3, in principle, carries out back-up acquisition of data that has not been acquired in the past, and carries out delivery of firmware to the slave stations 2, during the vacant time T3 in the data acquisition time cycle T1. In other words, the vacant time T3 is a time period during which communication with the upper-level server 3 is possible.

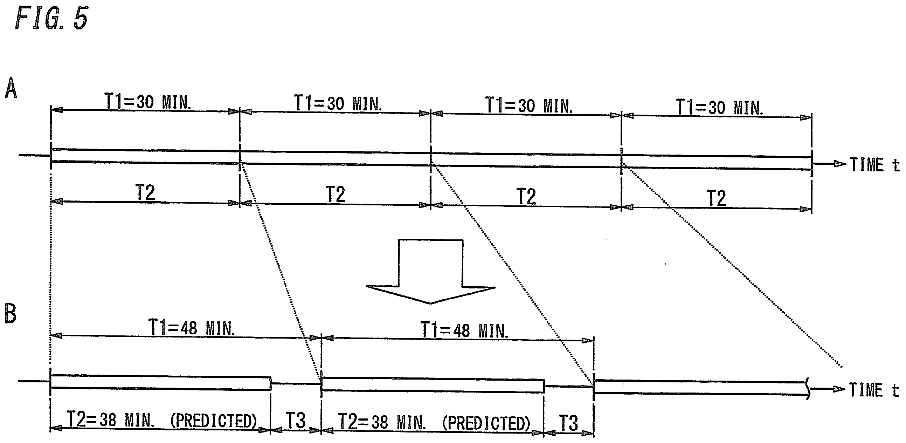

When the master station 1 has not been able to carry out a series of data acquisition from the plurality of slave stations 2 within the data acquisition time cycle T1, then as shown in "A" of Fig. 5, the data acquisition time cycle T1 is equal to the data acquisition required time period T2, and there is no vacant time T3 within the data acquisition time cycle T1. Therefore, the upper-level server 3 must refrain from back-up acquisition and/or firmware delivery. In the example in "A" of Fig. 5, the data acquisition time cycle T1 is 30 minutes, whereas the predicted value of the data acquisition required time period T2 is 38 minutes, which exceeds 30 minutes, and consequently, there is no vacant time T3 within the data acquisition time cycle T1.

The control unit 19 of the master station 1 sets the data acquisition time cycle T1 on the basis of information held in the master station 1 and relating to communications between the master station 1 and the slave stations 2. In other words, the control unit 19 functions as a time cycle setting unit.

In the present embodiment, the information relating to communications between the master station 1 and the slave stations 2 is a past data acquisition required time period T2 which is stored in the storage unit 14.

The control unit 19 stores, in the storage unit 14, a start timing of data acquisition from the first slave station 2 and an end timing of data acquisition from the last slave station 2, on each occasion that data acquisition from the plurality of slave stations 2 is carried out. The start timing and the end timing are indicated by the clock unit 15. At a prescribed cycle of, for instance, once per day, or an arbitrary cycle, the calculation unit 17 uses the data acquisition time cycle T1, the start timing and the end timing stored in the storage unit 14 to calculate the data acquisition required time period T2 needed for a past data acquisition, and the vacant time T3. The storage unit 14 stores the data acquisition required time period T2 calculated by the calculation unit 17, in association with the data acquisition time cycle T1 that was set in that case. The calculation unit 17 calculates a sum value by adding, to the data acquisition required time period T2, a prescribed proportion (for example, 20%) of T2. When the calculated value (sum value) of the calculation unit 17 is longer than the current data acquisition time cycle T1, then the control unit 19 changes the current data acquisition time cycle T1 which is stored in the storage unit 14, to the calculated value. The calculation unit 17 may calculate a sum value by adding a prescribed value to the data acquisition required time period T2 and the control unit 19 may set this sum value as the data acquisition time cycle T1. Furthermore, the control unit 19 may store the start timing and end timing of data acquisition for each slave station 2, in the storage unit 14, when data has been acquired from each of the slave stations 2.

As shown in "B" of Fig. 5, the master station 1 according to the present embodiment automatically adjusts the data acquisition time cycle T1 so as to ensure a vacant time T3 that can be used by the upper-level server 3 during the data acquisition time cycle T1. As a result of this, the efficiency of back-up acquisition and firmware delivery by the upper-level server 3 can be raised, and the overall operating efficiency of the data acquisition system characteristic amount be improved. In the example in "B" of Fig. 5, since the data acquisition time cycle T1 is lengthened from 30 minutes to 48 minutes, then the data acquisition time cycle T1 is greater than the data acquisition required time period T2 (= 38 minutes), and a vacant time T3 (= 10 minutes) can be obtained.

The storage unit 14 of the master station 1 stores a program for the master station 1, of which the main constituent element is a computer, to carry out functions of various kinds. In other words, the storage unit 14 stores a program which causes the master station 1 to function as the transmission unit 11, the reception unit 12, the upper-level system transmission and reception unit 13, the storage unit 14, the clock unit 15, the power source unit 16, the calculation unit 17, the route calculation unit 18 and the control unit 19. The master station 1 can acquire the program by using a computer-readable storage medium on which the program is recorded.

As described above, the data acquisition device (master station 1) relating to the present embodiment is configured to acquire data from the plurality of terminal devices (plurality of slave stations 2) holding the data and provide the data to the upper-level device (upper-level server 3). The data acquisition device includes a data acquisition unit (control unit 19) and a time cycle setting unit (control unit 19). The data acquisition unit is configured to acquire data from a plurality of terminal devices. The time cycle setting unit is configured to set a data acquisition time cycle for the data acquisition unit to periodically acquire the data from the plurality of terminal devices. The data acquisition time cycle has a data acquisition required time period for acquiring data from a plurality of terminal devices, and a time period during which the upper-level device can perform communications (vacant time). The time cycle setting unit is configured to set the data acquisition time cycle on the basis of at least one of information held in the data acquisition device and relating to communications between the data acquisition device and the plurality of terminal devices, and information relating to communications by the upper-level device.

The data acquisition system relating to the present embodiment includes a data acquisition device (master station 1) and a plurality of terminal devices (a plurality of slave stations 2). Each of the plurality of terminal devices has a function for holding data and a function for communicating with the data acquisition device.

The program relating to the present embodiment is a program which causes the computer, which is used in the data acquisition device (master station 1) configured to acquire data from the plurality of terminal devices (plurality of slave stations 2) holding the data and provide the data to the upper-level device (upper-level server 3), to function as a data acquisition unit (control unit 19) and a time cycle setting unit (control unit 19). The data acquisition unit is configured to acquire data from a plurality of terminal devices. The time cycle setting unit is configured to set a data acquisition time cycle at which the data acquisition unit acquires data periodically from the plurality of terminal devices. The data acquisition time cycle has a data acquisition required time period for acquiring data from a plurality of terminal devices, and a time period during which the upper-level device can perform communications (vacant time). The time cycle setting unit is configured to set the data acquisition time cycle on the basis of information held in the data acquisition device and relating to communications between the data acquisition device and the plurality of terminal devices.

As described above, the master station (data acquisition device) 1 relating to the present embodiment automatically sets a data acquisition time cycle for acquiring data periodically from each of the slave stations 2, on the basis of information held in the master station 1 and relating to the communications between the master station 1 and the slave stations (terminal devices) 2. Consequently, the overall operation of the data acquisition system can be carried out efficiently.

Furthermore, desirably, the data acquisition device (master station 1) further includes the storage unit 14 indicated below, as in the present embodiment. The storage unit 14 is configured to store the data acquisition required time period that was needed for the past data acquisition, and the data acquisition time cycle that was set in that case. Here, the information relating to the communications between the data acquisition device and the plurality of terminal devices (plurality of slave stations 2) is the data acquisition required time period which is stored in the storage unit 14. Desirably, when a sum value obtained by adding, to the data acquisition required time period stored in the storage unit 14, a prescribed proportion of the data acquisition required time period or a prescribed value is longer than the current data acquisition time cycle, the time cycle setting unit (control unit 19) is configured to set the data acquisition time cycle to the sum value.

In the present embodiment, it is possible to ensure a vacant time in the data acquisition time cycle, by setting the data acquisition time cycle to a sum value obtained by adding, to a past data acquisition required time period, a prescribed proportion thereof, for example. Consequently, back-up acquisition and firmware delivery can be carried out rapidly during the vacant time, without changing the data acquisition required time period.

The storage unit 14 of the master station 1 is configured to store a plurality of past data acquisition required time periods. Consequently, as a modification of the present embodiment, the master station 1 may set the data acquisition time cycle on the basis of a past data acquisition required time period which is stored in the storage unit 14.

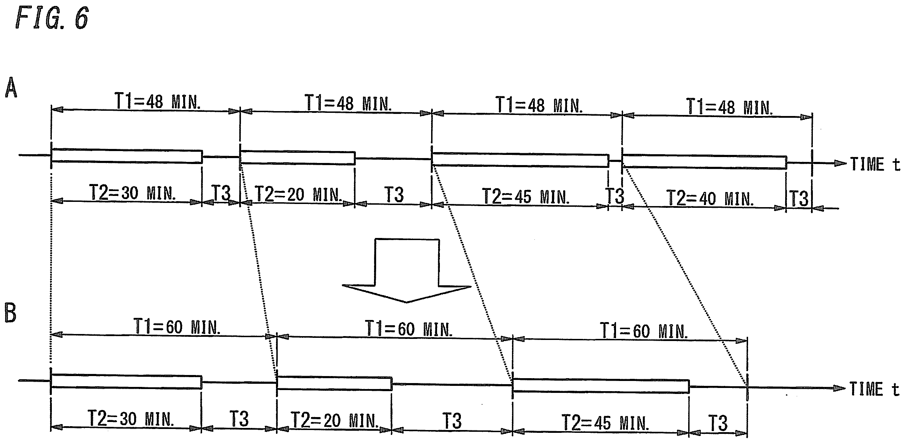

As shown in "A" of Fig. 6, if there is variation in the data acquisition required time period T2, then there are cases where a sufficient vacant time T3 is ensured, and cases where a sufficient vacant time T3 is not ensured. In the example in "A" of Fig. 6, the data acquisition required time period T2 varies between 30 minutes, 20 minutes, 45 minutes and 40 minutes, and hence there are cases where the vacant time T3 is short.

Therefore, the calculation unit 17 of the master station 1 calculates the average value of the past data acquisition required time periods T2 and the range variation thereof (for example, 3σ). The storage unit 14 stores the average value and variation of the past data acquisition required time periods T2. The control unit 19 statistically processes the average value and variation of the data acquisition required time period T2 which is stored in the storage unit 14. If the current data acquisition time cycle T1 is lower than the value obtained by adding the range of variation to the average value, then as shown in "B" of Fig. 6, the control unit 19 makes the data acquisition time cycle T1 longer, so as to exceed the upper limit value of the specified range of variation from the average value. In the example in "B" of Fig. 6, the data acquisition time cycle T1 is lengthened from 48 minutes to 60 minutes, as a result of taking account of the variation of the data acquisition required time period T2, and therefore it is possible to ensure a sufficient vacant time T3.

The storage unit 14 may be configured to store a plurality of data acquisition required time periods which have been needed for past data acquisitions, similarly to the data acquisition device (master station 1) relating to the present modification described above. In this case, the information relating to the communications between the data acquisition device and the plurality of terminal devices (plurality of slave stations 2) is the plurality of data acquisition required time periods which are stored in the storage unit 14. The time cycle setting unit (control unit 19) is configured to statistically process the average value and variation of the plurality of data acquisition required time periods stored in the storage unit 14, and set the data acquisition time cycle in such a manner that the current data acquisition time cycle exceeds the upper limit value of the specified range of variation from the average value.

As described above, the master station (data acquisition device) 1 according to the present modification is configured to set the data acquisition time cycle T1 so as to cover the range of variation of the plurality of past data acquisition required time periods. In this way, it is possible to set a data acquisition time cycle T1 which covers virtually the whole statistical range, and therefore the number of changes in the data acquisition time cycle T1 can be reduced. As a result of this, cycle setting which is stable in statistical terms can be expected.

### (Second embodiment)

The data acquisition system relating to the second embodiment differs from the data acquisition system according to the first embodiment in that the data acquisition time cycle is set on the basis of information relating to the communications of the upper-level server 3. The constituent parts which are similar to the data acquisition system according to the first embodiment are labelled with the same reference numerals and are omitted from this description.

The information relating to the communications of the upper-level server 3 is the type of communication of the upper-level server 3, for example. The type of communication of the upper-level server 3 is, for instance, acquisition of omitted portions of past data, in other words, back-up acquisition, firmware delivery, or the like. As stated previously, in principle, the communications of the upper-level server 3 are carried out in the vacant time apart from the data acquisition required time period, within the data acquisition time cycle.

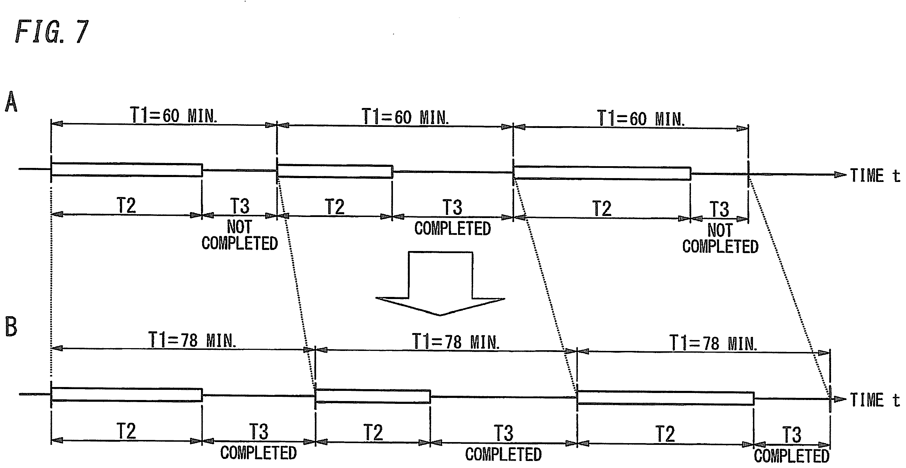

As shown in "A" of Fig. 7, since the vacant time T3 apart from the data acquisition required time period T2 varies with the length of the data acquisition required time period T2, then there are cases where the upper-level server 3 cannot complete the back-up acquisition in the vacant time T3.

Therefore, the control unit 19 of the master station 1 according to the present embodiment confirms the type of communication made by the upper-level server 3 to the slave station 2 via the master station 1, in the vacant time T3. The storage unit 14 according to the present embodiment stores a past data acquisition required time period T2 and the type of communication of the upper-level server 3 in the vacant time T3. Description of functions which are the same as the storage unit 14 and the control unit 19 according to the first embodiment is omitted here.

The control unit 19 confirms the type of communication stored in the storage unit 14 (the type of communication of the upper-level server 3), at a fixed cycle or an arbitrary cycle. If the type of communication of the upper-level server 3 is back-up acquisition, then the calculation unit 17 according to the present embodiment calculates a sum value obtained by adding, to the data acquisition required time period T2 stored in the storage unit 14, a prescribed proportion (similarly to the first embodiment) of T2 and a proportion of T2 determined for use for back-up acquisition. The control unit 19 sets the data acquisition time cycle T1 stored in the storage unit 14 to the calculation value of the calculation unit 17. The control unit 19 rewrites the data acquisition time cycle T1 to a length that enables back-up acquisition in respect of all data, in accordance with the number of back-up acquisitions, for example. Consequently, as shown in "B" of Fig. 7, the data acquisition time cycle T1 is set to a length whereby back-up acquisition can be completed within any vacant time T3. In the example in "B" of Fig. 7, since the data acquisition time cycle T1 is lengthened from 60 minutes to 78 minutes, then even if the data acquisition required time period T2 is long, a sufficient vacant time T3 can be ensured.

On the other hand, if the type of communication from the upper-level server 3 is firmware delivery, then a time period for firmware delivery is provided separately from the time period for back-up acquisition. In this case, the control unit 19 sets the new data acquisition time cycle to a sum value obtained by adding, to the data acquisition required time period, a prescribed proportion of the data acquisition required time period, and a proportion, determined for use for firmware delivery, of the data acquisition required time period or a prescribed amount determined for use for firmware delivery. If the time period for back-up acquisition in the vacant period of the data acquisition time cycle is long, then the control unit 19 does not have to ensure the time period for firmware delivery. In other words, the control unit 19 may ensure a time period for firmware delivery only in cases where the time period for back-up acquisition is short.

Desirably, the time cycle setting unit (control unit 19) is configured to set the data acquisition time cycle on the basis of information relating to the communications of the upper-level device (upper-level server 3), as in the data acquisition device (master station 1) relating to the present embodiment which was described above.

Desirably, the data acquisition device (master station 1) includes the storage unit 14 indicated below, as in the present embodiment. The storage unit 14 is configured to store the data acquisition required time period needed for data acquisition in the past and the type of communication of the upper-level device (upper-level server 3) which was carried out during the vacant time apart from the data acquisition required time period. In this case, the information relating to the communication of the upper-level device is the type of communications by the upper-level device. When the type of communications by the upper-level device is back-up acquisition, then the time cycle setting unit (control unit 19) is configured to set the data acquisition time cycle to a sum value obtained by adding, to the data acquisition required time period stored in the storage unit 14, a prescribed proportion of the data acquisition required time period, and a proportion, determined for use for back-up acquisition, of the data acquisition required time period, or a prescribed amount determined for use for back-up acquisition.

As in the data acquisition device relating to the present embodiment, desirably, the information relating to communications of the upper-level device (upper-level server 3) is the type of communication from the upper-level device, and the time cycle setting unit (control unit 19) is configured to set the data acquisition time cycle as indicated below. When the type of communications by the upper-level device is firmware delivery, the time cycle setting unit is configured to set the data acquisition time cycle to a sum value obtained by adding, to the data acquisition required time period, a prescribed proportion of the data acquisition required time period, and a proportion, determined for use for firmware delivery, of the data acquisition required time period or a prescribed amount determined for use for firmware delivery.

With the master station (data acquisition device) 1 relating to the present embodiment, operation of the overall data acquisition system can be carried out efficiently by setting the data acquisition time cycle automatically on the basis of the information relating to the communications of the upper-level server (upper-level device) 3.

Furthermore, in the present embodiment, it is possible to make fine cycle settings, such as ensuring a dedicated time band for data communications which have high priority, such as back-up acquisition. Moreover, in the present embodiment, it is possible to make fine cycle settings, such as ensuring a time band for firmware delivery which is predicted to continue for a very long delivery time. From the foregoing, optimal operation of the data acquisition system is possible.

The control unit 19 may be configured to set the new data acquisition time cycle to a sum value obtained by adding, to the data acquisition required time period stored in the storage unit 14, a prescribed proportion of the data acquisition required time period and a prescribed amount determined for use for back-up acquisition. In this case, the calculation unit 17 may be configured to calculate a sum value obtained by adding, to the data acquisition required time period stored in the storage unit 14, a prescribed proportion of the data acquisition required time period and a prescribed amount for use for back-up acquisition.

### (Third embodiment)

The data acquisition system relating to the third embodiment differs from the data acquisition system according to the first embodiment in that the data acquisition time cycle is set by using time cycle modification information from the upper-level server 3. The constituent parts which are similar to the data acquisition system according to the first embodiment are labelled with the same reference numerals and are omitted from this description.

The storage unit 14 of the master station 1 according to the present embodiment stores time cycle modification information which is instructed by the upper-level server 3, when there is a data acquisition time cycle modification instruction from the upper-level server 3. In the present embodiment, the information relating to communications between the master station 1 and the slave stations 2 is the time cycle modification information which is stored in the storage unit 14. Description of functions which are the same as the storage unit 14 according to the first embodiment is omitted here.

The control unit 19 of the master station 1 according to the present embodiment sets the time cycle in the time cycle modification information stored in the storage unit 14, as the data acquisition time cycle, when it is determined to be necessary to extend the data acquisition time cycle. Description of functions which are the same as the control unit 19 according to the first embodiment is omitted here.

Desirably, the data acquisition device (master station 1) includes a storage unit 14 configured to store time cycle modification information indicating a time cycle instructed by the upper-level device (upper-level server 3), as in the present embodiment which was described above. In this case, the information relating to the communications between the data acquisition device and the plurality of terminal devices (plurality of slave stations 2) is the time cycle modification information which is stored in the storage unit 14. When extending the data acquisition time cycle, the time cycle setting unit (control unit 19) is configured to set the data acquisition time cycle by using the time cycle modification information stored in the storage unit 14.

In the present embodiment, in the case, for example, of an operation that differs from the predicted values in the master station (data acquisition device) 1, the operation can be adjust to the state of operation of the upper-level server (upper-level device) 3, and therefore more optimal operation becomes possible in the overall data acquisition system.

### (Fourth embodiment)

The data acquisition system relating to the fourth embodiment differs from the data acquisition system according to the first embodiment in that the data acquisition time cycle is set by using a history of the number of omitted data elements. The constituent parts which are similar to the data acquisition system according to the first embodiment are labelled with the same reference numerals and are omitted from this description.

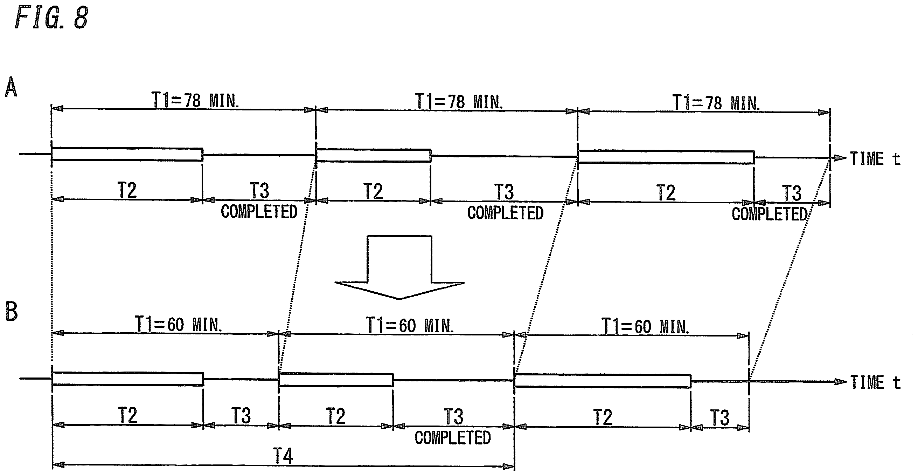

When the data acquisition time cycle T1 is set in such a manner that back-up acquisition is completed in each data acquisition time cycle T1, as shown in "A" of Fig. 8, then the data acquisition time cycle T1 becomes relatively long (for example, 78 minutes).

Therefore, the master station 1 according to the present embodiment sets a data acquisition time cycle T1 in such a manner that back-up acquisition is completed within a prescribed time period T4, which is longer than the data acquisition time cycle T1, as shown in "B" of Fig. 8, rather than back-up acquisition being completed within each data acquisition time cycle T1. In the example in "B" of Fig. 8, the prescribed time period T4 is 120 minutes, which is two times the data acquisition time cycle T1 (= 60 minutes).

The storage unit 14 of the master station 1 according to the present embodiment stores a history of past data acquisition required time periods T2, and a history of the number of omitted data elements which could not be acquired in the data acquisition required time period. In the present embodiment, the information relating to communications between the master station 1 and the slave stations 2 is the data acquisition required time period T2 and the number of omitted data elements which are stored in the storage unit 14. Description of functions which are the same as the storage unit 14 according to the first embodiment is omitted here.

As shown in "B" of Fig. 8, the control unit 19 of the master station 1 according to the present embodiment sets the data acquisition time cycle T1 so as to acquire all of the omitted data by back-up acquisition by the upper-level server 3, within the prescribed time period T4, which is longer than the data acquisition time cycle T1. In other words, the calculation unit 17 according to the present embodiment calculates the vacant time T3 so as to complete acquisition of all of the omitted data within the prescribed time period T4. The control unit 19 sets the data acquisition time cycle T1 so as to ensure the vacant time T3. Description of functions which are the same as the calculation unit 17 and the control unit 19 according to the first embodiment is omitted here.

Desirably, the data acquisition device (master station 1) includes the storage unit 14 indicated below, as in the present embodiment which was described above. The storage unit 14 is configured to store a history of the data acquisition required time period needed for past data acquisition, and the number of omitted data elements that could not be acquired in the data acquisition required time period. In this case, the information relating to the communications between the data acquisition device and the plurality of terminal devices (plurality of slave stations 2) is the history of the data acquisition required time period and the number of omitted data elements which is stored in the storage unit 14. The time cycle setting unit (control unit 19) is configured to set the data acquisition time cycle in such a manner that the omitted data elements are acquired by back-up acquisition by the upper-level device (upper-level server 3) within the prescribed time period T4, which is longer than the data acquisition time cycle.

According to the foregoing description, the master station (data acquisition device) 1 relating to the present embodiment sets the data acquisition time cycle in such a manner that the back-up acquisition is completed within a prescribed time period which is longer than the data acquisition time cycle. Consequently, compared to a case where the data acquisition time cycle is set in such a manner that back-up acquisition is completed in each data acquisition time cycle, it is possible to improve the data acquisition rate of the overall system, while minimizing the amount of extension of the data acquisition time cycle.

A technique which sets the data acquisition time cycle by using the history of the number of omitted data elements, as in the present embodiment, may also be applied to the data acquisition system according to the second and third embodiments.

### (Fifth embodiment)

The data acquisition system relating to the fifth embodiment differs from the data acquisition system according to the first embodiment in that the data acquisition time cycle is set by using the communication route and the communication quality between the master station 1 and the slave stations 2. The constituent parts which are similar to the data acquisition system according to the first embodiment are labelled with the same reference numerals and are omitted from this description.

The route calculation unit 18 of the master station 1 according to the present embodiment calculates the communication route and communication quality for each slave station 2, in such a manner that the master station 1 and the slave stations 2 carry out multi-hop communications. The communications quality is information about the communications route which is used when determining the communication speeds of the respective transmission paths between the master station 1 and the slave stations 2.

The storage unit 14 of the master station 1 according to the present embodiment stores the communication route and the communication quality, for each slave station 2. In the present embodiment, the information relating to communications between the master station 1 and the slave stations 2 is the communication route and the communication quality which are stored in the storage unit 14. Description of functions which are the same as the storage unit 14 according to the first embodiment is omitted here.

The calculation unit 17 according to the present embodiment calculates a turn-around time by using the communication route and communication speed stored in the storage unit 14, for each slave station 2. The calculation unit 17 then uses the turn-around times of the slave stations 2 to calculate a completion time during which data acquisition from all of the slave stations 2 is completed. Description of functions which are the same as the calculation unit 17 according to the first embodiment is omitted here.

The control unit 19 according to the present embodiment sets the data acquisition time cycle by setting the completion time calculated by the calculation unit 17 as the data acquisition required time period. Description of functions which are the same as the control unit 19 according to the first embodiment is omitted here.

Desirably, the data acquisition device (master station 1) includes the storage unit 14 and the calculation unit 17 indicated below, as in the present embodiment which was described above. The storage unit 14 is configured to store the communication route and the communication quality, for each of the plurality of terminal devices (plurality of slave stations 2). The calculation unit 17 is configured to calculate a turn-around time using the communication route and the communication quality, for each of the plurality of terminal devices, and then use these turn-around times to calculate the completion time during which the acquisition of data from the plurality of terminal devices is completed. The information relating to communications between the data acquisition device and the terminal devices is the communication route and the communication quality which are stored in the storage unit 14. The time cycle setting unit (control unit 19) sets the data acquisition time cycle in accordance with the completion time calculated by the calculation unit 17.

The master station (data acquisition device) 1 relating to the present embodiment is configured to predict the turn-around times using the communication route and the communication quality, for each slave station (terminal device) 2. Moreover, the master station 1 can accurately predict a completion time during which data acquisition from all of the slave stations 2 is completed and set the data acquisition time cycle by using the turn-around times of the slave stations 2. Consequently, the overall operation of the data acquisition system can be carried out more efficiently.

As a modification of the present embodiment, the time cycle setting unit (control unit 19) may be configured to also set the data acquisition time cycle to a sum value obtained by adding, to the completion time, a prescribed proportion of the completion time described above. The prescribed proportion may be 10%, for example. With the master station (data acquisition device) 1 according to the present modification, it is possible to respond to variations in the turn-around times of the slave stations (terminal devices) 2, by setting the data acquisition time cycle to a sum value obtained by adding, to the completion time, a prescribed proportion of the completion time, and therefore opportunities for back-up acquisition by the upper-level server (upper-level device) 3 can be provided, as appropriate.

The technique for setting the data acquisition time cycle by using the communication route and the communication quality between the master station 1 and the slave stations 2, as in the present embodiment, may also be applied to the data acquisition systems according to the second to fourth embodiments.

### (Sixth embodiment)

The data acquisition system according to the sixth embodiment differs from the data acquisition system according to the first embodiment in that a new data acquisition time cycle is set in accordance with the tendency of past change in the data acquisition time cycle. The constituent parts which are similar to the data acquisition system according to the first embodiment are labelled with the same reference numerals and are omitted from this description.

The storage unit 14 of the master station 1 according to the present embodiment stores a history of change of the data acquisition time cycle. In the present embodiment, the information relating to communications between the master station 1 and the slave stations 2 is the history of change of the data acquisition time cycle, which is stored in the storage unit 14. Description of functions which are the same as the storage unit 14 according to the first embodiment is omitted here.

The calculation unit 17 of the master station 1 according to the present embodiment calculates a time cycle in a direction which continues (extends) the past tendency of the data acquisition time cycle. The calculation unit 17 may calculate the time cycle so as to cause overshoot.

The control unit 19 of the master station 1 according to the present embodiment sets the data acquisition time cycle to the time cycle (calculation value) calculated by the calculation unit 17. Description of functions which are the same as the control unit 19 according to the first embodiment is omitted here.

When the past change in the data acquisition time cycle has been in the direction of increase, then the control unit 19 sets the data acquisition time cycle directly, whereas when the tendency of the past change in the data acquisition time cycle is in the direction of decrease, then the control unit 19 causes the data acquisition time cycle to follow the tendency only in cases where the calculation value (prediction value) of the calculation unit 17 is lower than a determination reference.

In other words, when the past change in the data acquisition time cycle has been in the direction of decrease, then the calculation unit 17 does not follow this in changing the data acquisition time cycle, unless the calculation value is a prescribed proportion, for instance, 10%, lower. On the other hand, as described above, hysteresis is not applied to the calculation result of the calculation unit 17 when the change is in the direction of increase.

Desirably, the time cycle setting unit (control unit 19) is configured to set a new data acquisition time cycle in accordance with the past tendency of change in the data acquisition time cycle, as in the data acquisition device relating to the present embodiment described above. In this case, the data acquisition device includes a storage unit 14 configured to store the history of past change in the data acquisition time cycle. In this case, the information relating to the communications between the data acquisition device and the plurality of terminal devices (plurality of slave stations 2) is the history of past change in the data acquisition time cycle, which is stored in the storage unit 14. The time cycle setting unit is configured to set a new data acquisition time cycle in accordance with the tendency of past change in the data acquisition time cycle, which is stored in the storage unit 14.

Desirably, when the tendency of past change in the data acquisition time cycle is in the direction of decrease, the time cycle setting unit (control unit 19) is configured to only cause the data acquisition time cycle to follow the change in cases where a prediction value which is predicted on the basis of the tendency of change in the data acquisition time cycle is lower than a specified determination reference, as in the data acquisition device relating to the present embodiment.

Desirably, the time cycle setting unit (control unit 19) does not have a determination reference, when the past tendency of change in the data acquisition time cycle is in the direction of increase, as in the data acquisition device relating to the present embodiment described above.

As described above, the master station (data acquisition device) 1 according to the present embodiment is configured to set the data acquisition time cycle so as to cause overshoot in the direction of increase, when the past change in the data acquisition time cycle is in the direction of increase, for example. Consequently, it is possible to promote operation of the data acquisition system which includes a margin.

Furthermore, in the present embodiment, in circumstances where the data acquisition time cycle varies greatly, the data acquisition system operates on the side of safety by using a long data acquisition time cycle, rather than reacting with excessive sensitivity. Consequently, the overall operation of the data acquisition system can be carried out stably.

Moreover, in the present embodiment, it is possible to ensure a sufficient vacant time by causing the data acquisition time cycle to follow the direction of increase directly, when the change is in the direction of increase which requires immediate response, and therefore the operation of the system including the upper-level server (upper-level device) 3 can be carried out more stably.

The technique of setting a new data acquisition time cycle in accordance with the tendency of past change in the data acquisition time cycle, as in the present embodiment, may also be applied to the data acquisition systems according to the second to fifth embodiments.

The present invention has been described here on the basis of several preferred embodiments, but the invention could be amended or modified variously by a person skilled in the art within the original scope of the present invention, in other words, without departing from the scope of the claims.

## Claims

1. A data acquisition device (1) configured to acquire data from a plurality of terminal devices (2) holding the data and provide the data to an upper-level device (3), the data acquisition device (1) comprising:
a data acquisition unit configured to acquire the data from the plurality of terminal devices; and
a time cycle setting unit configured to set a data acquisition time cycle for the data acquisition unit to periodically acquire the data from the plurality of terminal devices, wherein the data acquisition time cycle includes a data acquisition required time period for acquiring the data from the plurality of terminal devices, and a time period during which the upper-level device can perform communications, and
the time cycle setting unit configured to set the data acquisition time cycle by automatically adjusting the data acquisition time cycle to an optimal time cycle on the basis of information stored in the data acquisition device (1) and relating to at least one of (i) communications between the data acquisition device (1) and the plurality of terminal devices (2) and (ii) communications by the upper-level device (3).

2. The data acquisition device according to claim 1,
further comprising a storage unit (14) configured to store a data acquisition required time period needed for past data acquisition, and the data acquisition time cycle set in that case,
wherein the information relating to communications between the data acquisition device (1) and the plurality of terminal devices (2) is the data acquisition required time period which is stored in the storage unit (14) and
when a sum value obtained by adding, to the data acquisition required time period stored in the storage unit (14), a prescribed proportion of the data acquisition required time period or a prescribed value is longer than the current data acquisition time cycle, the time cycle setting unit is configured to set the data acquisition time cycle to the sum value.

3. The data acquisition device according to claim 1,
further comprising a storage unit (14) configured to store a plurality of data acquisition required time periods needed for past data acquisition,
wherein the information relating to communications between the data acquisition device (1) and the plurality of terminal devices (2) is the plurality of data acquisition required time periods which are stored in the storage unit (14), and
the time cycle setting unit is configured to statistically process an average value and variation of the plurality of data acquisition required time periods stored in the storage unit (14), and set the data acquisition time cycle in such a manner that the current data acquisition time cycle exceeds an upper limit value of a specified range of variation from the average value.

4. The data acquisition device according to claim 1,
further comprising a storage unit (14) configured to store a data acquisition required time period needed for past data acquisition and a type of communications by the upper-level device (3) performed during a vacant time other than the data acquisition required time period,
wherein the information relating to the communications by the upper-level device (3) is the type of communications by the upper-level device (3), and
when the type of communications by the upper-level device (3) is back-up acquisition, the time cycle setting unit is configured to set the data acquisition time cycle to a sum value obtained by adding, to the data acquisition required time period stored in the storage unit (14), a prescribed proportion of the data acquisition required time period, and a proportion, determined for use for back-up acquisition, of the data acquisition required time period or a prescribed amount determined for use for back-up acquisition.

5. The data acquisition device according to claim 1,
wherein the information relating to the communications by the upper-level device (3) is the type of communication from the upper-level device (3), and
when the type of communication from the upper-level device (3) is firmware delivery, the time cycle setting unit is configured to set the data acquisition time cycle to a sum value obtained by adding, to the data acquisition required time period, a prescribed proportion of the data acquisition required time period, and a proportion, determined for use for firmware delivery, of the data acquisition required time period or a prescribed amount determined for use for firmware delivery.

6. The data acquisition device according to claim 1,
further comprising a storage unit (14) configured to store time cycle modification information indicating a time cycle instructed by the upper-level device (3),
wherein the information relating to communications between the data acquisition device (1) and the plurality of terminal devices (2) is the time cycle modification information which is stored in the storage unit (14), and
when extending the data acquisition time cycle, the time cycle setting unit is configured to set the data acquisition time cycle by using the time cycle modification information stored in the storage unit (14).

7. The data acquisition device according to claim 1,
further comprising a storage unit (14) configured to store a history of the data acquisition required time period needed for past data acquisition, and the number of omitted data elements that could not be acquired in the data acquisition required time period,
wherein the information relating to communications between the data acquisition device (1) and the plurality of terminal devices (2) is the history of the data acquisition required time period and the number of omitted data elements, which is stored in the storage unit (14), and
the time cycle setting unit is configured to set the data acquisition time cycle in such a manner that the omitted data elements are acquired by back-up acquisition by the upper-level device (3) in a prescribed time period which is longer than the data acquisition time cycle.

8. The data acquisition device according to claim 1,
further comprising:
a storage unit (14) configured to store a communication route and a communication quality for each of the plurality of terminal devices (2); and
a calculation unit (17) configured to calculate a turn-around time by using the communication route and the communication quality, for each of the plurality of terminal devices (2), and calculate a completion time during which the acquisition of data from the plurality of terminal devices (2) is completed, by using the turn-around times,
wherein the information relating to communications between the data acquisition device (1) and the plurality of terminal devices (2) is the communication route and the communication quality which are stored in the storage unit (14), and
the time cycle setting unit is configured to set the data acquisition time cycle in accordance with the completion time calculated by the calculation unit (17).

9. The data acquisition device according to claim 8, wherein the time cycle setting unit is configured to set the data acquisition time cycle to a sum value obtained by adding, to the completion time, a prescribed proportion of the completion time.

10. The data acquisition device according to claim 1,
further comprising a storage unit (14) configured to store a history of past change in the data acquisition time cycle,
wherein the information relating to communications between the data acquisition device (1) and the plurality of terminal devices (2) is the history of past change in the data acquisition time cycle, which is stored in the storage unit (14), and
the time cycle setting unit is configured to set a new data acquisition time cycle in accordance with a tendency of past change in the data acquisition time cycle, which is stored in the storage unit (14).

11. The data acquisition device according to claim 10, wherein, when the tendency of past change in the data acquisition time cycle is in a direction of decrease, the time cycle setting unit causes the data acquisition time cycle to follow this change only when a prediction value which is predicted on the basis of the tendency of change in the data acquisition time cycle is lower than a specified determination reference.

12. The data acquisition device according to claim 11, wherein the time cycle setting unit does not have the determination reference, when the tendency of the past change in the data acquisition time cycle is in a direction of increase.

13. A data acquisition system, comprising:
the data acquisition device (1) according to any one of claims 1 to 12; and
a plurality of terminal devices (2) each having a function for holding data and a function for communicating with the data acquisition device (1).

14. A program for causing a computer, which is used in a data acquisition device (1) configured to acquire data from a plurality of terminal devices (2) holding the data and provide the data to an upper-level device (3), to function as:
a data acquisition unit configured to acquire the data from the plurality of terminal devices (2); and
a time cycle setting unit configured to set a data acquisition time cycle for the data acquisition unit to periodically acquire the data from the plurality of terminal devices (2),
wherein the data acquisition time cycle includes a data acquisition required time period for acquiring the data from the plurality of terminal devices (2), and a time period during which the upper-level device (3) can perform communications, and
the time cycle setting unit configured to set the data acquisition time cycle by automatically adjusting the data acquisition time cycle to an optimal time cycle on the basis of information stored in the data acquisition device (1) and relating to at least one of (i) communications between the data acquisition device (1) and the plurality of terminal devices (2) and (ii) communications by the upper-level device (3).

## Patentansprüche

1. Datenerfassungsvorrichtung (1), die konfiguriert ist, um Daten mehrerer Endvorrichtungen (2) zu erfassen, die die Daten halten und die Daten für eine übergeordnete Vorrichtung (3) vorzusehen, wobei die Datenerfassungsvorrichtung (1) umfasst:
eine Datenerfassungseinheit, die konfiguriert ist, um die Daten der mehreren Endvorrichtungen zu erfassen; und
eine Zeitzykluseinstelleinheit, die konfiguriert ist, um einen Datenerfassungszeitzyklus für die Datenerfassungseinheit einzustellen, um die Daten der mehreren Endvorrichtungen periodisch zu erfassen, wobei der Datenerfassungszeitzyklus eine für die Datenerfassung erforderliche Zeitspanne zum Erfassen der Daten der mehreren Endvorrichtungen und eine Zeitspanne, in der die übergeordnete Vorrichtung Kommunikationen durchführen kann, beinhaltet, und
die Zeitzykluseinstelleinheit konfiguriert ist, um den Datenerfassungszeitzyklus durch ein automatisches Anpassen des Datenerfassungszeitzyklus an einen optimalen Zeitzyklus auf der Grundlage von Informationen einzustellen, die in der Datenerfassungsvorrichtung (1) gespeichert sind und die sich auf mindestens eines von (i) Kommunikationen zwischen der Datenerfassungsvorrichtung (1) und den mehreren Endvorrichtungen (2) und (ii) Kommunikationen durch die übergeordnete Vorrichtung (3) beziehen.

2. Datenerfassungsvorrichtung nach Anspruch 1,
ferner eine Speichereinheit (14) umfassend, die konfiguriert ist, um eine für die Datenerfassung erforderliche Zeitspanne, die für eine vergangene Datenerfassung benötigt wurde, und den in diesem Fall eingestellten Datenerfassungszeitzyklus zu speichern,
wobei die Informationen, die sich auf Kommunikationen zwischen der Datenerfassungsvorrichtung (1) und den mehreren Endvorrichtungen (2) beziehen, die für die Datenerfassung erforderliche Zeitspanne beinhalten, die in der Speichereinheit (14) gespeichert ist, und
wenn ein Summenwert, der erhalten wird, indem zu der für die Datenerfassung erforderlichen Zeitspanne, die in der Speichereinheit (14) gespeichert ist, ein vorgegebener Anteil der für die Datenerfassung erforderlichen Zeitspanne oder ein vorgegebener Wert länger als der aktuelle Datenerfassungszeitzyklus ist, die Zeitzykluseinstelleinheit konfiguriert ist, um den Datenerfassungszeitzyklus auf den Summenwert einzustellen.

3. Datenerfassungsvorrichtung nach Anspruch 1,
ferner eine Speichereinheit (14) umfassend, die konfiguriert ist, um mehrere für die Datenerfassung erforderliche Zeitspannen zu speichern, die für eine vergangene Datenerfassung benötigt wurden,
wobei die Informationen, die sich auf die Kommunikationen zwischen der Datenerfassungsvorrichtung (1) und den mehreren Endvorrichtungen (2) beziehen, die mehreren für die Datenerfassung erforderlichen Zeitspannen beinhalten, die in der Speichereinheit (14) gespeichert sind, und
die Zeitzykluseinstelleinheit konfiguriert ist, um einen Mittelwert und eine Variation der mehreren für die Datenerfassung erforderlichen Zeitspannen, die in der Speichereinheit (14) gespeichert sind, statistisch zu verarbeiten und den Datenerfassungszeitzyklus so einzustellen, dass der aktuelle Datenerfassungszeitzyklus einen oberen Grenzwert eines spezifizierten Variationsbereichs ausgehend von dem Mittelwert überschreitet.

4. Datenerfassungsvorrichtung nach Anspruch 1,
ferner eine Speichereinheit (14) umfassend, die konfiguriert ist, um eine für die Datenerfassung erforderliche Zeitspanne, die für eine vergangene Datenerfassung benötigt wurde, und eine Art von Kommunikationen durch die übergeordnete Vorrichtung (3) zu speichern, die während einer freien Zeit durchgeführt wird, die von der für die Datenerfassung erforderlichen Zeitspanne abweicht,
wobei die Informationen, die sich auf die Kommunikationen durch die übergeordnete Vorrichtung (3) beziehen, die Art von Kommunikationen durch die übergeordnete Vorrichtung (3) beinhalten, und
wenn die Art von Kommunikationen durch die übergeordnete Vorrichtung (3) eine Sicherungserfassung ist, die Zeitzykluseinstelleinheit konfiguriert ist, um den Datenerfassungszeitzyklus auf einen Summenwert einzustellen, der durch ein Hinzufügen eines vorgegebenen Anteils der für die Datenerfassung erforderlichen Zeitspanne und eines für die Verwendung für die Sicherungserfassung bestimmten Anteils der für die Datenerfassung erforderlichen Zeitspanne oder eines vorgegebenen, für die Verwendung für die Sicherungserfassung bestimmten Betrags zu der für die Datenerfassung erforderlichen Zeitspanne, die in der Speichereinheit (14) gespeichert ist, erhalten wird.

5. Datenerfassungsvorrichtung nach Anspruch 1,
wobei die Informationen, die sich auf die Kommunikationen durch die übergeordnete Vorrichtung (3) beziehen, die Art von Kommunikationen von der übergeordneten Vorrichtung (3) beinhalten, und
wenn die Art von Kommunikation von der übergeordneten Vorrichtung (3) eine Firmware-Auslieferung ist, die Zeitzykluseinstelleinheit konfiguriert ist, um den Datenerfassungszeitzyklus auf einen Summenwert einzustellen, der durch ein Hinzufügen eines vorgegebenen Anteils der für die Datenerfassung erforderlichen Zeitspanne und eines für die Verwendung zur Firmware-Auslieferung bestimmten Anteils der für die Datenerfassung erforderlichen Zeitspanne oder eines vorgegebenen Betrags, der für die Verwendung zur Firmware-Auslieferung bestimmt ist, zu der für die Datenerfassung erforderlichen Zeitspanne erhalten wird.

6. Datenerfassungsvorrichtung nach Anspruch 1,
ferner umfassend eine Speichereinheit (14), die konfiguriert ist, um Zeitzyklusänderungsinformationen zu speichern, die einen von der übergeordneten Vorrichtung (3) angewiesenen Zeitzyklus anzeigen,
wobei die Informationen, die sich auf die Kommunikationen zwischen der Datenerfassungsvorrichtung (1) und den mehreren Endvorrichtungen (2) beziehen, die Zeitzyklusänderungsinformationen beinhalten, die in der Speichereinheit (14) gespeichert sind, und
wenn der Datenerfassungszeitzyklus verlängert wird, die Zeitzykluseinstelleinheit konfiguriert ist, um den Datenerfassungszeitzyklus unter Verwendung der in der Speichereinheit (14) gespeicherten Zeitzyklusänderungsinformationen einzustellen.

7. Datenerfassungsvorrichtung nach Anspruch 1,
ferner eine Speichereinheit (14) umfassend, die konfiguriert ist, um eine Vorgeschichte der für die Datenerfassung erforderlichen Zeitspanne, die für eine vergangene Datenerfassung benötigt wurde, und die Zahl der weggelassenen Datenelemente zu speichern, die in der für die Datenerfassung erforderlichen Zeitspanne nicht erfasst werden konnten,
wobei die Informationen, die sich auf die Kommunikationen zwischen der Datenerfassungsvorrichtung (1) und den mehreren Endvorrichtungen (2) beziehen, die Vorgeschichte der für die Datenerfassung erforderlichen Zeitspanne und die Zahl der weggelassenen Datenelemente beinhalten, die in der Speichereinheit (14) gespeichert sind, und
die Zeitzykluseinstelleinheit konfiguriert ist, um den Datenerfassungszeitzyklus so einzustellen, dass die weggelassenen Datenelemente durch eine Sicherungserfassung durch die übergeordnete Vorrichtung (3) in einem vorgegebenen Zeitraum, der länger als der Datenerfassungszeitzyklus ist, erfasst werden.

8. Datenerfassungsvorrichtung nach Anspruch 1,
ferner umfassend:
eine Speichereinheit (14), die konfiguriert ist, um einen Kommunikationsweg und eine Kommunikationsqualität für jede der mehreren Endvorrichtungen (2) zu speichern; und eine Berechnungseinheit (17), die konfiguriert ist, um eine Umlaufzeit unter Verwendung des Kommunikationsweges und der Kommunikationsqualität für jede der mehreren Endvorrichtungen (2) zu berechnen und eine Vollendungszeit zu berechnen, während der die Erfassung von Daten von den mehreren Endvorrichtungen (2) unter Verwendung der Umlaufzeit vollendet wird,
wobei die Informationen, die sich auf die Kommunikationen zwischen der Datenerfassungsvorrichtung (1) und den mehreren Endvorrichtungen (2) beziehen, den Kommunikationsweg und die Kommunikationsqualität beinhalten, die in der Speichereinheit (14) gespeichert sind, und
die Zeitzykluseinstelleinheit konfiguriert ist, um den Datenerfassungszeitzyklus gemäß der von der Berechnungseinheit (17) berechneten Vollendungszeit einzustellen.

9. Datenerfassungsvorrichtung nach Anspruch 8, wobei die Zeitzykluseinstelleinheit konfiguriert ist, um den Datenerfassungszeitzyklus auf einen Summenwert einzustellen, der durch ein Hinzufügen eines vorgegebenen Anteils der Vollendungszeit zu der Vollendungszeit erhalten wird.

10. Datenerfassungsvorrichtung nach Anspruch 1,
ferner eine Speichereinheit (14) umfassend, die konfiguriert ist, um eine Vorgeschichte einer vergangenen Änderung des Datenerfassungszeitzyklus zu speichern,
wobei die Informationen, die sich auf die Kommunikationen zwischen der Datenerfassungsvorrichtung (1) und den mehreren Endvorrichtungen (2) beziehen, die Vorgeschichte einer vergangenen Änderung des Datenerfassungszeitzyklus beinhalten, die in der Speichereinheit (14) gespeichert ist, und
die Zeitzykluseinstelleinheit konfiguriert ist, um einen neuen Datenerfassungszeitzyklus gemäß einer Tendenz einer vergangenen Änderung des Datenerfassungszeitzyklus, die in der Speichereinheit (14) gespeichert ist, einzustellen.

11. Datenerfassungsvorrichtung nach Anspruch 10, wobei, wenn die Tendenz einer vergangenen Änderung des Datenerfassungszeitzyklus abnehmend ist, die Zeitzykluseinstelleinheit bewirkt, dass der Datenerfassungszeitzyklus dieser Änderung nur dann folgt, wenn ein Vorhersagewert, der als Grundlage für die Tendenz einer Änderung des Datenerfassungszeitzyklus vorhergesagt wird, kleiner ist als eine spezifizierte Bestimmungsreferenz.

12. Datenerfassungsvorrichtung nach Anspruch 11, wobei die Zeitzykluseinstelleinheit die Bestimmungsreferenz nicht aufweist, wenn die Tendenz der vergangenen Änderung des Datenerfassungszeitzyklus zunehmend ist.

13. Datenerfassungssystem, umfassend:
die Datenerfassungsvorrichtung (1) nach einem der Ansprüche 1 bis 12; und
mehrere Endvorrichtungen (2), die jeweils eine Funktion zum Halten von Daten und eine Funktion zum Kommunizieren mit der Datenerfassungsvorrichtung (1) aufweisen.

14. Programm zum Bewirken, dass ein Computer, der in einer Datenerfassungsvorrichtung (1) verwendet wird, die konfiguriert ist, um Daten mehrerer Endvorrichtungen (2), die die Daten halten, zu erfassen und die Daten für eine übergeordnete Vorrichtung (3) vorzusehen, arbeitet als:
eine Datenerfassungseinheit, die konfiguriert ist, um die Daten der mehreren Endvorrichtungen (2) zu erfassen; und
eine Zeitzykluseinstelleinheit, die konfiguriert ist, um einen Datenerfassungszeitzyklus für die Datenerfassungseinheit einzustellen, um die Daten der mehreren Endvorrichtungen (2) periodisch zu erfassen,
wobei der Datenerfassungszeitzyklus eine für die Datenerfassung erforderliche Zeitspanne zum Erfassen der Daten der mehreren Endvorrichtungen (2) und eine Zeitspanne beinhaltet, in der die übergeordnete Vorrichtung (3) Kommunikationen durchführen kann, und
die Zeitzykluseinstelleinheit konfiguriert ist, um den Datenerfassungszeitzyklus durch ein automatisches Anpassen des Datenerfassungszeitzyklus an einen optimalen Zeitzyklus auf der Grundlage von Informationen einzustellen, die in der Datenerfassungsvorrichtung (1) gespeichert sind und die sich auf mindestens eines von (i) Kommunikationen zwischen der Datenerfassungsvorrichtung (1) und den mehreren Endvorrichtungen (2) und (ii) Kommunikationen durch die übergeordnete Vorrichtung (3) beziehen.

## Revendications

1. Dispositif d'acquisition de données (1) configuré de manière à acquérir des données à partir d'une pluralité de dispositifs terminaux (2) maintenant les données, et à fournir les données à un dispositif de niveau supérieur (3), le dispositif d'acquisition de données (1) comprenant :
une unité d'acquisition de données configurée de manière à acquérir les données à partir de la pluralité de dispositifs terminaux ; et
une unité de définition de cycle temporel configurée de manière à définir un cycle temporel d'acquisition de données afin de permettre à l'unité d'acquisition de données d'acquérir périodiquement les données à partir de la pluralité de dispositifs terminaux, dans lequel le cycle temporel d'acquisition de données inclut une période de temps requise d'acquisition de données pour acquérir les données à partir de la pluralité de dispositifs terminaux, et une période de temps au cours de laquelle le dispositif de niveau supérieur peut mettre en oeuvre des communications ; et
dans lequel l'unité de définition de cycle temporel est configurée de manière à définir le cycle temporel d'acquisition de données en ajustant automatiquement le cycle temporel d'acquisition de données à un cycle temporel optimal sur la base d'informations stockées dans le dispositif d'acquisition de données (1) et connexes au moins l'une parmi (i) des communications entre le dispositif d'acquisition de données (1) et la pluralité de dispositifs terminaux (2), et (ii) des communications mises en oeuvre par le dispositif de niveau supérieur (3).

2. Dispositif d'acquisition de données selon la revendication 1, comprenant en outre une unité de stockage (14) configurée de manière à stocker une période de temps requise d'acquisition de données pour une acquisition de données antérieure, et le cycle temporel d'acquisition de données défini dans ce cas ;
dans lequel les informations connexes aux communications entre le dispositif d'acquisition de données (1) et la pluralité de dispositifs terminaux (2) correspondent à la période de temps requise d'acquisition de données qui est stockée dans l'unité de stockage (14) ; et
lorsqu'une valeur de somme, obtenue en ajoutant, à la période de temps requise d'acquisition de données stockée dans l'unité de stockage (14), une proportion prescrite de la période de temps requise d'acquisition de données, ou lorsqu'une valeur prescrite, est plus longue que le cycle temporel d'acquisition de données en cours, l'unité de définition de cycle temporel est configurée de manière à définir le cycle temporel d'acquisition de données sur la valeur de somme.

3. Dispositif d'acquisition de données selon la revendication 1, comprenant en outre une unité de stockage (14) configurée de manière à stocker une pluralité de périodes de temps requises d'acquisition de données nécessaires pour une acquisition de données antérieure, dans lequel les informations connexes aux communications entre le dispositif d'acquisition de données (1) et la pluralité de dispositifs terminaux (2) correspondent à la pluralité de périodes de temps requises d'acquisition de données qui sont stockées dans l'unité de stockage (14) ; et
l'unité de définition de cycle temporel est configurée de manière à traiter statistiquement une valeur moyenne et une variation de la pluralité de périodes de temps requises d'acquisition de données stockées dans l'unité de stockage (14), et à définir le cycle temporel d'acquisition de données de telle manière que le cycle temporel d'acquisition de données en cours dépasse une valeur limite supérieure d'une plage de variation spécifiée par rapport à la valeur moyenne.

4. Dispositif d'acquisition de données selon la revendication 1, comprenant en outre une unité de stockage (14) configurée de manière à stocker une période de temps requise d'acquisition de données nécessaire pour une acquisition de données antérieure, et un type de communications mises en oeuvre par le dispositif de niveau supérieur (3) au cours d'un temps vacant distinct de la période de temps requise d'acquisition de données ;
dans lequel les informations connexes aux communications mises en oeuvre par le dispositif de niveau supérieur (3) correspondent au type de communications mises en oeuvre par le dispositif de niveau supérieur (3) ; et
lorsque le type de communications mises en oeuvre par le dispositif de niveau supérieur (3) correspond à une acquisition de secours, l'unité de définition de cycle temporel est configurée de manière à définir le cycle temporel d'acquisition de données sur une valeur de somme obtenue en ajoutant, à la période de temps requise d'acquisition de données stockée dans l'unité de stockage (14), une proportion prescrite de la période de temps requise d'acquisition de données, et une proportion, déterminée comme étant à utiliser dans le cadre d'une acquisition de secours, de la période de temps requise d'acquisition de données ou une quantité prescrite déterminée comme étant à utiliser dans le cadre d'une acquisition de secours.

5. Dispositif d'acquisition de données selon la revendication 1, dans lequel les informations connexes aux communications mises en oeuvre par le dispositif de niveau supérieur (3) correspondent au type de communication en provenance du dispositif de niveau supérieur (3) ; et
lorsque le type de communication en provenance du dispositif de niveau supérieur (3) correspond à une distribution de micrologiciel, l'unité de définition de cycle temporel est configurée de manière à définir le cycle temporel d'acquisition de données sur une valeur de somme obtenue en ajoutant, à la période de temps requise d'acquisition de données, une proportion prescrite de la période de temps requise d'acquisition de données, et une proportion, déterminée comme étant à utiliser dans le cadre d'une distribution de micrologiciel, de la période de temps requise d'acquisition de données, ou une quantité prescrite déterminée comme étant à utiliser dans le cadre d'une distribution de micrologiciel.

6. Dispositif d'acquisition de données selon la revendication 1, comprenant en outre une unité de stockage (14) configurée de manière à stocker des informations de modification de cycle temporel indiquant un cycle temporel ordonné par le dispositif de niveau supérieur (3) ;
dans lequel les informations connexes aux communications entre le dispositif d'acquisition de données (1) et la pluralité de dispositifs terminaux (2) correspondent aux informations de modification de cycle temporel qui sont stockées dans l'unité de stockage (14) ; et
lorsque le cycle temporel d'acquisition de données est prolongé, l'unité de définition de cycle temporel est configurée de manière à définir le cycle temporel d'acquisition de données en utilisant les informations de modification de cycle temporel stockées dans l'unité de stockage (14).

7. Dispositif d'acquisition de données selon la revendication 1, comprenant en outre une unité de stockage (14) configurée de manière à stocker un historique de la période de temps requise d'acquisition de données nécessaire pour une acquisition de données antérieure, et le nombre d'éléments de données omis qui n'ont pu être acquis au cours de la période de temps requise d'acquisition de données ;
dans lequel les informations connexes aux communications entre le dispositif d'acquisition de données (1) et la pluralité de dispositifs terminaux (2) correspondent à l'historique de la période de temps requise d'acquisition de données et au nombre d'éléments de données omis, lesquels sont stockés dans l'unité de stockage (14) ; et l'unité de définition de cycle temporel est configurée de manière à définir le cycle temporel d'acquisition de données d'une telle manière que les éléments de données omis sont acquis par le biais d'une acquisition de secours par le dispositif de niveau supérieur (3) au cours d'une période de temps préscrite qui est plus longue que le cycle temporel d'acquisition de données.

8. Dispositif d'acquisition de données selon la revendication 1, comprenant en outre :
une unité de stockage (14) configurée de manière à stocker un trajet de communication et une qualité de communication pour chaque dispositif de la pluralité de dispositifs terminaux (2) ; et
une unité de calcul (17) configurée de manière à calculer un temps d'exécution en utilisant le trajet de communication et la qualité de communication, pour chaque dispositif de la pluralité de dispositifs terminaux (2), et à calculer un temps d'achèvement au cours duquel l'acquisition de données à partir de la pluralité de dispositifs terminaux (2) est achevée, en utilisant les temps d'exécution ;
dans lequel les informations connexes aux communications entre le dispositif d'acquisition de données (1) et la pluralité de dispositifs terminaux (2) correspondent au trajet de communication et à la qualité de communication qui sont stockés dans l'unité de stockage (14) ; et
l'unité de définition de cycle temporel est configurée de manière à définir le cycle temporel d'acquisition de données selon le temps d'achèvement calculé par l'unité de calcul (17).

9. Dispositif d'acquisition de données selon la revendication 8, dans lequel l'unité de définition de cycle temporel est configurée de manière à définir le cycle temporel d'acquisition de données sur une valeur de somme obtenue en ajoutant, au temps d'achèvement, une proportion prescrite du temps d'achèvement.

10. Dispositif d'acquisition de données selon la revendication 1, comprenant en outre une unité de stockage (14) configurée de manière à stocker un historique de changements antérieurs dans le cycle temporel d'acquisition de données ;
dans lequel les informations connexes aux communications entre le dispositif d'acquisition de données (1) et la pluralité de dispositifs terminaux (2) correspondent à l'historique de changements antérieurs dans le cycle temporel d'acquisition de données, lequel est stocké dans l'unité de stockage (14) ; et
dans lequel l'unité de définition de cycle temporel est configurée de manière à définir un nouveau cycle temporel d'acquisition de données selon une tendance de changements antérieurs dans le cycle temporel d'acquisition de données, laquelle est stockée dans l'unité de stockage (14).

11. Dispositif d'acquisition de données selon la revendication 10, dans lequel, lorsque la tendance de changements antérieurs dans le cycle temporel d'acquisition de données suit une direction de diminution, l'unité de définition de cycle temporel amène le cycle temporel d'acquisition de données à ne suivre ce changement que lorsqu'une valeur de prédiction qui est prédite sur la base de la tendance de changements dans le cycle temporel d'acquisition de données est inférieure à une référence de détermination spécifiée.

12. Dispositif d'acquisition de données selon la revendication 11, dans lequel l'unité de définition de cycle temporel ne présente pas la référence de détermination lorsque la tendance de changements antérieurs dans le cycle temporel d'acquisition de données est dans une direction d'augmentation.

13. Système d'acquisition de données, comprenant :
le dispositif d'acquisition de données (1) selon l'une quelconque des revendications 1 à 12 ; et
une pluralité de dispositifs terminaux (2) présentant chacun une fonction pour maintenir des données et une fonction pour communiquer avec le dispositif d'acquisition de données (1).

14. Programme destiné à amener un ordinateur, qui est utilisé dans un dispositif d'acquisition de données (1) configuré de manière à acquérir des données à partir d'une pluralité de dispositifs terminaux (2) maintenant les données, et à fournir les données à un dispositif de niveau supérieur (3), à fonctionner en tant que :
une unité d'acquisition de données configurée de manière à acquérir les données à partir de la pluralité de dispositifs terminaux (2) ; et
une unité de définition de cycle temporel configurée de manière à définir un cycle temporel d'acquisition de données afin de permettre à l'unité d'acquisition de données d'acquérir périodiquement les données à partir de la pluralité de dispositifs terminaux (2) ;
dans lequel le cycle temporel d'acquisition de données inclut une période de temps requise d'acquisition de données pour acquérir les données à partir de la pluralité de dispositifs terminaux (2), et une période de temps au cours de laquelle le dispositif de niveau supérieur (3) peut mettre en oeuvre des communications ; et
dans lequel l'unité de définition de cycle temporel est configurée de manière à définir le cycle temporel d'acquisition de données en ajustant automatiquement le cycle temporel d'acquisition de données à un cycle temporel optimal sur la base d'informations stockées dans le dispositif d'acquisition de données (1) et connexes au moins l'une parmi (i) des communications entre le dispositif d'acquisition de données (1) et la pluralité de dispositifs terminaux (2), et (ii) des communications mises en oeuvre par le dispositif de niveau supérieur (3).
